# EUROPEAN PATENT SPECIFICATION

(11) **EP 1 100 712 B1**
(45) Date of publication and mention of the grant of the patent: **27.03.2002**
(21) Application number: 99934898.0
(22) Date of filing: 20.07.1999
(51) Int. Cl.: B62D 25/08

(54) **MOTOR VEHICLE SUB-ASSEMBLY**
KRAFTFAHRZEUG-UNTERBAUGRUPPE
SOUS-ENSEMBLE POUR AUTOMOBILE

(30) Priority: 30.07.1998 GB 9816610
(43) Date of publication of application: 23.05.2001
(73) Proprietor: Bayerische Motoren Werke Aktiengesellschaft, 80809 München (DE)
(72) Inventor: HARRIS, Craig Paul, Hollybrook, Swindon, Wiltshire SN2 3WD (GB); BROWN, Richard Peter, Stratford-upon-Avon, Warwicksh. CV37 7AD (GB)
(86) International application number: GB9902343
(87) International publication number: WO0006441

(56) References cited:
- DE-C- 4 342 759
- US-A- 4 900 082

## Description

The present invention relates to a sub-assembly for a motor vehicle. The invention has particular, but not exclusive, utility in the front region of a motor vehicle.

A number of such sub-assemblies for a motor vehicle are known. One prior art sub-assembly according to the preamble of claim 1 is disclosed in US 4,900,082 A in which a front structure for a motor vehicle has wheel-mounting sides each supported on transverse end panel by forked carrier securable to front pillar. Two side members are provided on either side of and at a distance from the central longitudinal axis of the vehicle. For each side member, a forked carrier is provided which is in the form of a hollow section and connects the side member to an end panel of the passenger cell to ensure good safety for the passengers. Another prior art subassembly is disclosed in DE 43 42 759 C1 in which a motor vehicle front stiffener has C-shaped curved beam at each side joined to floor and column of passenger-compartment structure. The structure is joined to a rigid passenger-compartment structure. At each side, it has a curved C-shaped beam protruding forwards. One arm of the beam is joined to the compartment structure at the floor of the latter, and the other at an A-shaped column.

It is highly desirable to provide a motor vehicle with means to absorb energy in the event of a vehicle impact. It is known to provide various energy management sub-assemblies about a passenger cell of a vehicle. The passenger cell includes a front bulkhead and a floor. In the event of a frontal vehicle impact it is desirable that the impact energy is dissipated with as little intrusion through the bulkhead into the passenger cell as possible.

It is known to provide, on each side of the cell, a generally L-shaped structural member. A longer portion of each structural member runs beneath and is connected to the floor of the passenger cell. A shorter portion of the structural member is connected to the bulkhead at the front of the passenger cell. A longitudinal member is connected to an upper end of the shorter portion of the structural member. The longitudinal member is designed to collapse to absorb kinetic energy on impact. However, such a design is not without problems. The longitudinal member may not absorb all of the energy of impact and may shear off from the structural member and punch through the bulkhead into the passenger cell. Alternatively, the undissipated energy may cause bending of the L-shaped structural member causing the bulkhead to collapse into the passenger cell.

Forming the structural member and the longitudinal member into a single member will prevent the longitudinal member from punching into the cell, but does not address the problems of bending moments generated in the structure. In addition such a structure deals primarily with dissipating the energy of a full frontal impact. This structure does not deal well with the side component of any impact energy.

The present invention has an advantage, the reduction or substantial elimination of these problems.

According to a first aspect of the present invention, a subassembly for a motor vehicle having a passenger cell incorporating a bulkhead, first pillars on each side of the cell and a support structure beneath the cell, the subassembly comprising two longitudinal members and a cross member, characterized in that the subassembly further comprises two connecting members, each connecting member connecting the support structure to one of the side pillars and in that the cross member extends between the connecting members.

Preferable the connecting members are of generally arcuate shape. Conveniently, the connecting members are joined to the bulkhead.

Preferably, the cross member is joined to the bulkhead.

The present invention will now be described, by way of example only, in which:
Figure 1 shows a side view of a known energy management sub-assembly for a motor vehicle;
Figure 2 shows a plan view of the sub-assembly of Figure 1;
Figure 3 shows a front view of the sub-assembly of Figure 1; and
Figure 4 shows a first perspective view of an energy management sub-assembly according to the present invention.

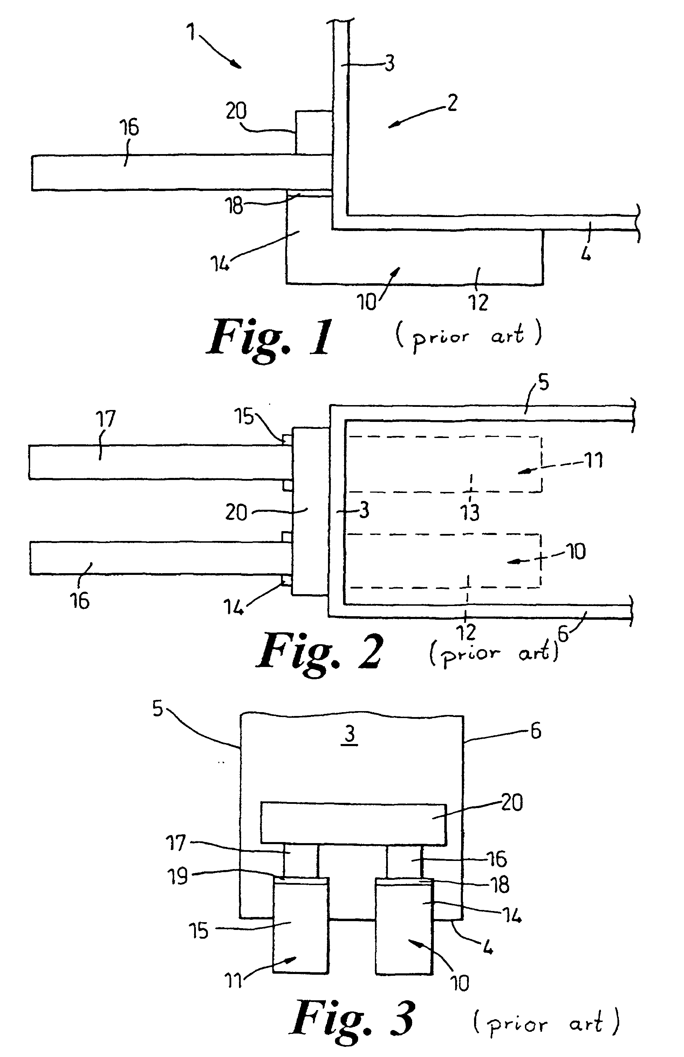

Referring first to Figure 1 to 3, there is shown a known energy management sub-assembly 1 for a motor vehicle. A passenger cell 2 includes a front bulkhead 3, a floor 4 and side walls 5, 6 in which the vehicle doors may be fitted. The front bulkhead 3 typically forms the footwell of the passenger cell. On each side of the passenger cell, there is provided a generally L-shaped structural member 10, 11. A longer portion 12, 13 of the structural member 10, 11 runs beneath and is connected to the floor 4 of the passenger cell. A shorter portion 14, 15 of the structural member 10, 11 is connected to the front bulkhead 3. A longitudinal member 16, 17 is connected by a joint 18, 19 to a free end of the shorter portion 14, 15 of the structural member 10, 11. A cross-member 20 is connected to the front bulkhead 3 and to each of the longitudinal members 16, 17.

The longitudinal members 16, 17 are designed to collapse to absorb energy in the event of impact. If the longitudinal member 16, 17does not absorb all of the energy, it is intended that the energy will be dispersed along the L-shaped structural members 10, 11. However, there is a danger that the joints 18, 19 may fracture, driving the longitudinal members 16, 17 into the cross-member 20 and the front bulkhead 3, causing the bulkhead 3 to intrude into the passenger cell 2. Even if the joints do not fracture, there is a problem that the shorter portion 14, 15 of the structural member 10, 11 may bend about a lower end, again with the result that the front bulkhead 3 is driven to intrude into the passenger cell 2.

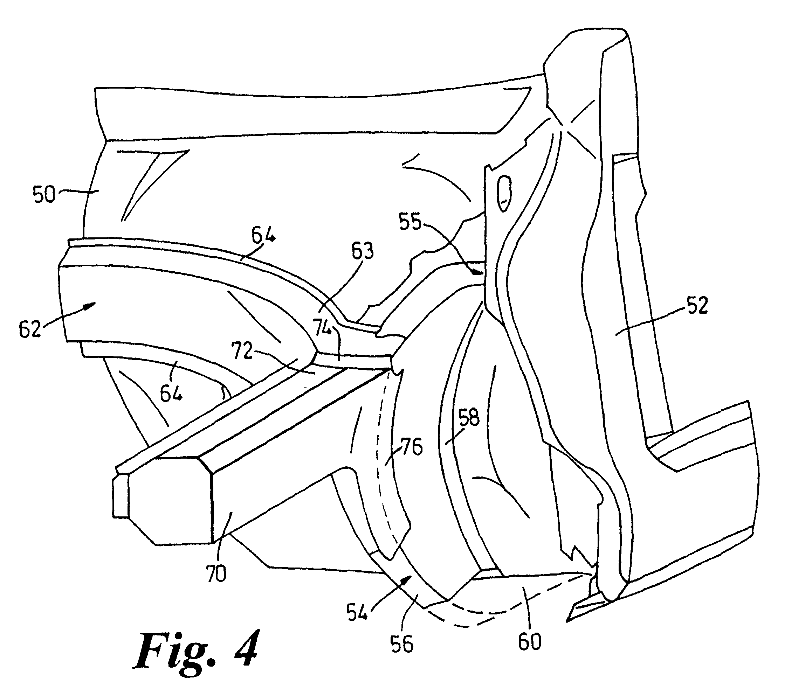

Referring now to Figure 4, there can be seen a perspective view of part of a sub-assembly according to the present invention. Figure 4 shows one half of a bulkhead 50 with an associated subassembly according to the invention. The other half of the bulkhead 50 and associated sub-assembly is a mirror image of this one. A support structure 60 is shown in ghost only in Figure 4 for reasons of clarity.

A passenger cell, of which the bulkhead 50 is shown, is mounted on the support structure 60. At the front and adjacent each side of the passenger cell are arranged first pillars 52.

A connecting member 54 extends between the support structure 60 and one of the first pillars 52. The connecting member 54 is of generally arcuate form to conform to the shape of the bulkhead 50. The connecting member 54 is joined at a first end 55 of the one of the first pillars 52. The connecting member 54 is joined at a second end 56 to the support structure 60. The connecting member 54 is also connected along its length to the bulkhead 50. Conveniently, the connecting member 54 is provided with at least one flange 58 by which it may be connected to the bulkhead 50. The connecting member 54 may be welded along the at least one flange 58 to the bulkhead 50. the connecting member 54 may alternatively or additionally be connected to the bulkhead 50 by any other convenient means.

A cross member 62 is joined at a first end 63 to the connecting member 54. The cross member 62 is joined at a second end (not shown) to another connecting member (not shown). The cross member 62 is also connected along its length to the bulkhead 50. Conveniently, the cross member 62 is provided with two flanges 64 by which it may be connected to the bulkhead 50. The cross member 62 may be welded along the flanges 64 to the bulkhead 50. The cross member 62 may alternatively or additionally be connected to the bulkhead 50 by any other convenient means.

A longitudinal member 70 extends forwardly of the rest of the sub-assembly. The longitudinal member 70 is connected at one end 72 to the connecting member 54 and the cross member 62. the end 72 of the longitudinal member 70 is provided with a first set 74 and a second set 76 of flanges by which the longitudinal member may be secured in position. The longitudinal member 70 may be secured by welding and additionally by any other convenient means.

In use, each of the front longitudinal members 70 is adapted to crumple to dissipate the longitudinal component of the impact energy. Any energy not dissipated is directed away toward a midpoint of the connecting member 54. the connecting member 54 is anchored at one end 55 to a first pillar 52 and at a second end 56 to the support structure 60. The connecting member 54 being of arcuate shape and in particular being convex with respect to the longitudinal member 70 is very stiff and is not adapted to bend back at this point. It is because of this that the longitudinal members 70 may be crushed to a greater extend than in the prior art and thus absorb more of the energy of impact. In addition any excess is directed along the connecting member 54 and away from the bulkhead 50 and towards the first pillars 52 and the support structure 60.

If the first end 55 of the connecting member 54 is not connected the pillar 52, a bending moment will be created at the second end 56 of the connecting member 54 causing the connecting member 54 to deform the bulkhead 50 to enter the passenger cell. The connection to the pillar 52 means that any undissipated impact energy must first break this connection before such a bending moment will be generated. It can be seen that in this way the bulkhead 50 is protected from intrusion by the vehicle sub-assembly.

In addition, it will be understood that this arrangement has an advantage that it can, to a limited extent, deal with a side component of an impact. For example, in an impact directed to a comer of the vehicle, the longitudinal members 70 will crumple to dissipate the front component of this impact, and the connecting members 54 will dissipate the side component of the energy away from the passenger cell to the first pillars 52.

## Claims

1. A subassembly for a motor vehicle having a passenger cell incorporating a bulkhead (50), first pillars (52) on each side of the cell and a support structure (60) beneath the cell, the subassembly comprising two longitudinal members (70) and a cross member (62), two connecting members **(54),** each connecting member **(54)** connecting the support structure **(60)** to one of the side pillars **(52)** and the cross member **(62)** extending between the connecting members **(54),** the connecting members **(54)** being of generally arcuate shape conform to the shape of the bulkhead **(50)**, **characterized in that** the connecting member (54) are connected along their length to the bulkhead (50).

2. A subassembly according to claim 1 or claim 2, **characterised in that** the cross member **(62)** is joined to the bulkhead **(50).**

3. A subassembly according to any previous claim, **characterised in that** each connecting member **(54)** is formed as an extension of the support structure **(60)** beneath the passenger cell.

## Patentansprüche

1. Untereinheit für ein Kraftfahrzeug mit einer Fahrgastzelle, die eine Schutzwand (50), erste Stützpfeiler (52) auf jeder Seite der Zelle und ein Tragwerk (60) unterhalb der Zelle enthält, wobei die Untereinheit zwei Längsträger (70), eine Verstrebung (62) und zwei Verbindungsglieder (54) umfaßt, und wobei jedes Verbindungsglied (54) das Tragwerk (60) mit einem der Stützpfeiler (52) verbindet und die Verstrebung (62) sich zwischen den Verbindungsgliedern (54) erstreckt, wobei die Verbindungsglieder (54) eine generell gewölbte Form entsprechend der Form der Schutzwand (50) aufweisen, **dadurch gekennzeichnet, daß** die Verbindungsglieder (54) ihrer Länge nach mit der Schutzwand (50) verbunden sind.

2. Untereinheit nach Anspruch 1, **dadurch gekennzeichnet, daß** die Verstrebung (62) mit der Schutzwand (50) verbunden ist.

3. Untereinheit nach einem der vorstehenden Ansprüche, **dadurch gekennzeichnet, daß** jedes Verbindungsglied (54) eine Verlängerung des Tragwerks (60) unterhalb der Fahrgastzelle bildet.

## Revendications

1. Sous-ensemble pour un véhicule automobile ayant une cellule de passagers comprenant une cloison (50), des premières colonnes (52) de chaque côté de la cellule et une structure de support (60) sous la cellule, ce sous-ensemble comprenant deux éléments longitudinaux (70) et un élément transversal (62), deux éléments de liaison (54) reliant chacun la structure de support (60) à l'une des colonnes latérales (52) et l'élément transversal (62) s'étendant entre les éléments de liaison (54), ces derniers ayant une forme générale courbe pour s'adapter à la forme de la cloison (50),
**caractérisé en ce que**
les éléments de liaison (54) sont reliés à la cloison (50) sur toute leur longueur.

2. Sous-ensemble selon la revendication 1,
**caractérisé en ce que**
l'élément transversal (62) est assemblé à la cloison (50).

3. Sous-ensemble selon l'une quelconque des revendications précédentes,
**caractérisé en ce que**
chaque élément de liaison (54) est formé comme un prolongement de la structure de support (60) sous la cellule des passagers.
